# EUROPEAN PATENT SPECIFICATION

(11) **EP 0 666 794 B1**
(45) Date of publication and mention of the grant of the patent: **22.01.1997**
(21) Application number: 94900080.6
(22) Date of filing: 27.10.1993
(51) Int. Cl.: B29C 57/12

(54) **FLANGING APPARATUS PARTICULARLY FOR HOLLOW ARTICLES OBTAINED BY THERMOFORMING SHEET MATERIAL**
BÖRDELVORRICHTUNG SPEZIELL FÜR HOHLE GEGENSTÄNDE GEWOHNEN AUS WARMGEFORMTEN FOLIENBAHNEN
APPAREIL A FORMER OU A ROULER LES BORDS, NOTAMMENT LES BORDS D'ARTICLES CREUX OBTENUS PAR FORMAGE THERMIQUE D'UNE FEUILLE DE MATERIAU

(30) Priority: 28.10.1992 IT VR920092
(43) Date of publication of application: 16.08.1995
(73) Proprietor: ISAP O.M.V. GROUP SPA, I-37025 Parona (IT)
(72) Inventor: PADOVANI, Pietro, I-37100 Verona (IT)
(74) Representative: Thomson, Paul Anthony
(86) International application number: EP9302979
(87) International publication number: WO9409968

(56) References cited:
- GB-A- 2 263 660
- NL-A- 257 490
- NL-A- 278 458

## Description

The present invention relates to a flanging or curling device particularly for articles obtained by thermoforming from thermoformable sheet material according to the preamble of claim 1 and to a method according to the preamble of claim 8, both preambles being based upon NL-A-278458.

Various arrangements for the flanging or curling of hollow objects such as beakers, cups, tubs or the like, all having a circular upper perimeter, trays and the like obtained by moulding by thermoforming from a thermoformable synthetic material, especially sheet material, have been proposed. See for example Italian Patent No. 85008 A/89 filed on the 18.12.1989 in the name of O.M.V. Spa.

Reference is made also to the disclosures in NL-A-278458 and NL-A-257490.

The arrangements proposed hitherto invariably provide for the supply of heat to the object to be curled before or during the flanging stage so that the edge of the article being flanged is suitably heated. This is because the flanging operation takes place after the hollow objects have been thermoformed and stacked. Of course in order to be transferred to a flanging machine the objects have to be first transferred to a separating or unstacking station arranged to separate the objects from each other and deliver them in sequence to a feeder for the flanging machine. Feeders with preheated rollers threaded with a variable pitch for progressive separation of the objects are widely used in the art.

Belt or suction tube feeding devices which are however, like roller feeders, only used for flanging round objects have also been proposed.

The flanging device in turn substantially comprises a generally fixed seat to receive an object to be curled and a die which is designed to mate with the inner edge of the receiving seat engaged by the partly curled edge of the object which is to be flanged.

With the high levels of productivity which can be achieved with the most up-to-date and sophisticated thermoforming units with mask conveyors, a conventional flanging device is not capable of keeping up with production line work where polypropylene or polyethylene, i.e. high entropy resins, are used.

An object of the present invention is to provide a flanging or curling apparatus which is capable of overcoming the abovementioned disadvantages and which is therefore able to work in an integrated way with modern thermoforming machinery.

A specific object of the present invention is that the said curling or flanging apparatus is able to effect the simultaneous flanging of all the objects obtained in one moulding operation in the thermoforming unit, within the cycle time of the thermoforming unit and without the provision of external heat to the objects, but taking advantage of the objects' heat of thermoforming.

Another object of the present invention is that the said flanging apparatus is structurally very simple to manufacture and of high reliability and productivity.

These and other objects which will be more apparent below are achieved by a curling or flanging apparatus particularly for hollow articles obtained by thermoforming from thermoformable sheet material according to the invention for use in a thermoforming plant provided with a mask conveyor for transfer of the thermoformed objects, which apparatus comprises a supporting frame which delimits at least one workstation for a sequence of masks supporting hot thermoformed objects carried by the conveyor and at least one head for the simultaneous flanging of all objects at the or each workstation.

Further features and advantages of this invention will be more apparent from the following detailed description of some embodiments given by way of example with reference to the appended drawings, in which:

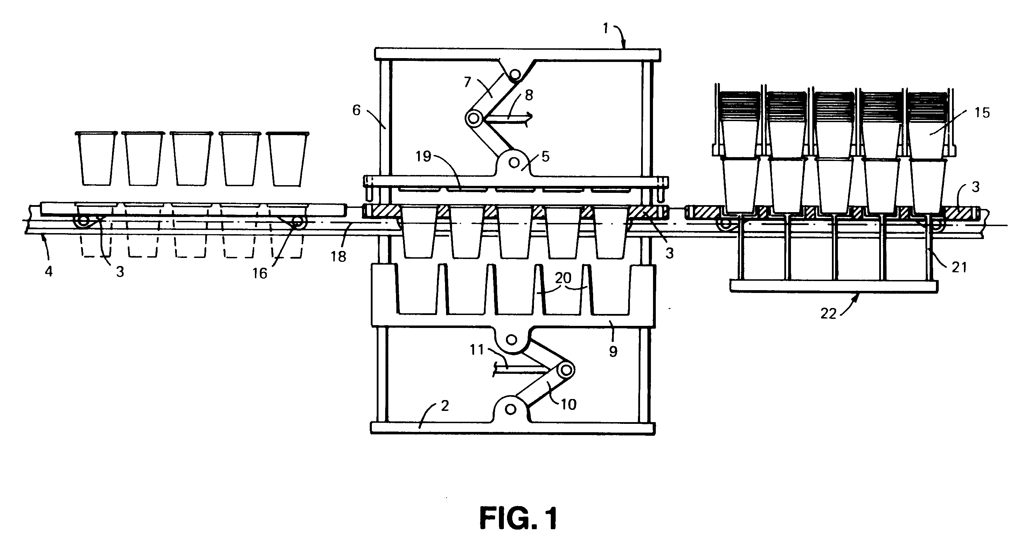

Fig. 1 is a diagrammatical view in front elevation of a first embodiment of the flanging device with an upper die support and a lower opposing frame, each of which are capable of movement, illustrated in the position following the loading of a mask loaded with objects into the workstation;
Fig. 2 illustrated another embodiment in a view similar to that in Fig. 1 with the flanging apparatus in the position in which it starts curling or flanging but with an opposing frame located between a forward and a return run or length of the mask conveyor;
Fig. 3 is a view in partial cross-section and on a larger scale of an object seated in a supporting mask before the flanging operation;
Fig. 4 is a view similar to that in Fig. 1, but which illustrates a further embodiment in which the upper die support is fixed and the flanging apparatus is in the position in which flanging is started;
Fig. 5 illustrates a view similar to that in Fig. 3, but which illustrates supporting mask after the flanging operation, and
Fig. 6 shows a detail of Fig. 5 on a larger scale.

With reference to the Figs. listed above, it will be noted that a curling or flanging apparatus or device 1 according to the present invention comprises a supporting frame 2 delimiting therein a workstation through which passes a sequence of masks 3 forming part of a mask conveyor 4 which passes through frame 2. In the upper part the workstation is delimited by an upper male die support 5 which is mounted so as to slide along guides or uprights 6 and can be operated e.g. by means of a toggle device actuated by a rod 8 which, in turn, can be driven synchronously with the working rate of a thermoforming unit. Below, the workstation may be delimited by an opposing frame 9 which is mounted slidably on guides or uprights 6 and is driven for example by a toggle device 10 controlled by a rod 11 which is driven synchronously with rod 8.

Advantageously the female die is comprised of the various masks 3 which stop in sequence at the workstation.

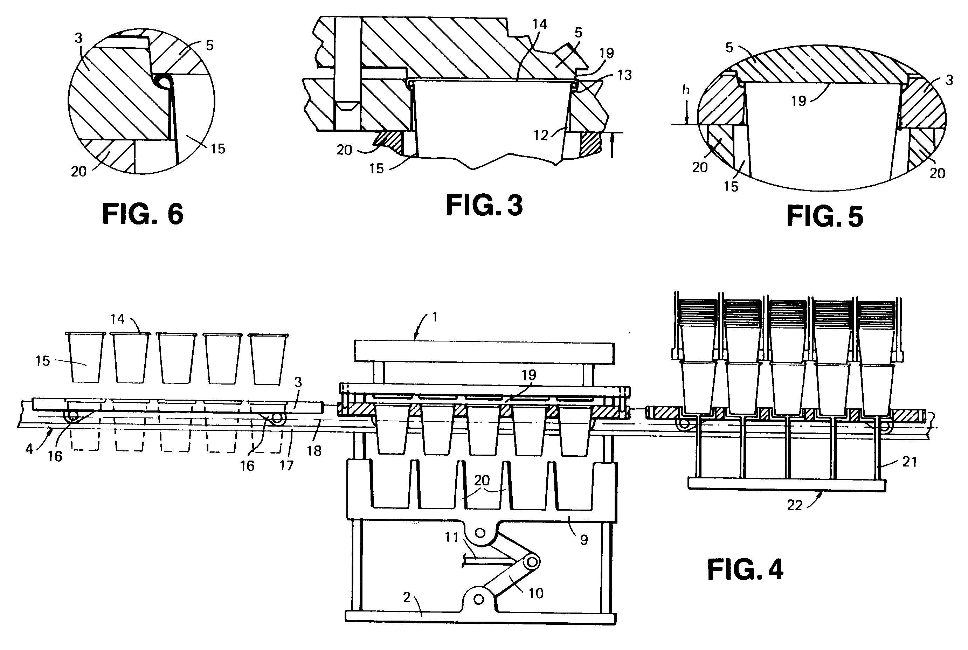

As will be better seen in Figs. 3 and 5, each mask 3 has a plurality of seats 12, for example 25 circular openings arranged in rows or offset or in any desired arrangement, each having a shaped and gauged peripheral recess 13 alongside their inner edge. Advantageously the number of seats 12 in each mask is equal to the number of impressions by the thermoforming unit, in which case each mask is capable of receiving all the objects produced in one moulding operation on each occasion.

Shaped recess 13 is designed to be engaged by the trimmed edge 14 of an object 15, such as e.g. a beaker or a pot of thermoformable material, e.g. directly discharged from the thermoforming unit, and therefore still relatively hot.

In the drawing masks 3 are illustrated in the form of trolleys with four wheels 16, which are designed to run on straight supporting guides 17 extending through the workstation, and are drawn e.g. by a chain or pair of chains (18) which act intermittently so as to displace masks 3 stepwise in accordance with the rate of the operating cycle of the thermoforming unit.

Advantageously stop and securing means for masks 3 can be provided at the workstation, e.g. stops with an inclined plane, which ensure correct positioning between mask 3 and die 5, making use of the yielding of automatic tensioners 23 for chain or chains 18.

Correspondingly male die support 5 has as many projections 19 as there are seats 12, each projection being arranged so as to be centred above a corresponding seat 12 and gauged so as to mate accurately with recess 13. Opposing frame 9, which in turn may advantageously incorporate a plurality of posts or other projecting portions 20 designed to engage beneath the various masks 3 located at the workstation to compensate for the dynamic loading imparted to each mask by male die support 5 when the latter is lowered in order to flange objects 15 supported therein.

The flanging stroke is indicated by h in Figs. 3 and 5 and this corresponds to the depth of penetration of each projection 19 into the recess in the seat lying beneath. The curling of flange 14 of each object is performed hot, directly taking advantage of the heat of thermoforming still available in objects 15, i.e. without resorting to the supply of additional heat provided by additional heat sources. Flanging is therefore performed immediately after the objects have been removed from the thermoforming mould, but before any other processing or handling, and in any event before they are stacked by means of pusher devices 21 in a subsequent workstation, generically indicated by 22, with a resulting appreciable saving in thermal energy, and always within the cycle time of the thermoforming unit.

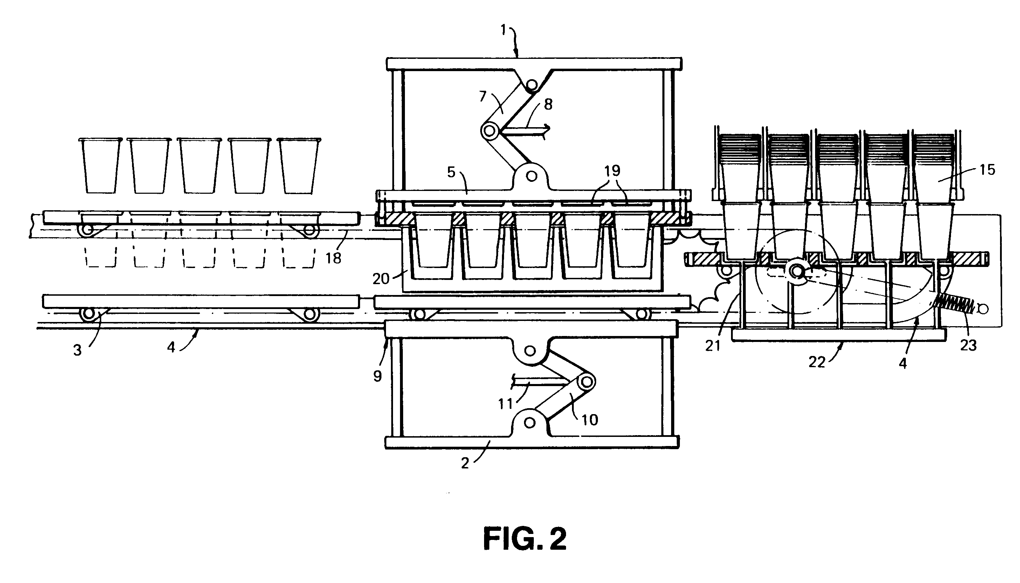

Fig. 2 shows an embodiment in which both the working (upper) run of conveyor 4 loaded with objects 15 and the (lower) empty return run pass through the workstation within the flanging apparatus. In this case two masks are present at the workstation at the same time, an upper one loaded with objects 15 and a lower empty one, and opposing frame 9 is subdivided into two portions - an upper portion incorporating the posts or other portions in relief 20 located between the two masks in the workstation and a lower portion beneath the empty mask.

In the embodiment in Fig. 4 upper die support 5 is fixed. Opposing frame 9 therefore has the function of pushing and raising mask 3 loaded with the objects 15 which require flanging against support 5, making use of the yielding of automatic tensioners 23 for chain or chains 18.

Detachment between support 5 and mask 3 takes place as a result of the resilient force exerted by the automatic chain tensioner or tensioners 23 (see Fig. 2).

The apparatus described above is susceptible of many modifications and variations within the protection scope defined by the claims below.

It will be appreciated that the flanging device described above can effect the flanging of thermoformed containers regardless of the geometric profile of their mouths, which may be round or of some other configuration.

## Claims

1. A curling or flanging apparatus for thermoformed hollow objects obtained in a thermoforming unit provided with a mask or template conveyer (4) having a plurality of masks or templates (3), each formed with the same number of seats (12) as the number of impressions by the thermoforming unit, so that each mask or template (3) is capable of receiving and transferring all the objects (15) produced in one moulding operation of the said thermoforming unit, characterized in that the said curling or flanging apparatus (1) is arranged about the path of the said mask or template conveyor (4) and comprises a supporting frame (2) carrying an upper male die support (5) disposed above at least one run of the said mask or template conveyor (4) and has as many die projections (19) facing the conveyor (4) as are seats (12) for the thermoformed objects (15) in each mask or template (3) of the mask conveyor (4), each die projection (19) being gauged so as to mate with a respective seat (12) in a mask or template (3) and each mask or template (3) acting as a female die provided with a gauged peripheral curling recess (13); an opposing frame (9) arranged below the male die support (5) and the or each run of the mask or template conveyor (4) and slidably mounted on vertical guides (6) so as to be movable towards and away from a mask or template (3) arranged above thereof; and driving means (10) for actuating synchronously with the operating cycle of the said thermoforming unit either of the male die support (5) or the opposing frame (9) or both for bringing together and moving apart the said male die support (5) and a mask or template (3) of the mask or template conveyor (4) to obtain curling of the objects (15) loaded in the mask, or template (3) while taking advantage of the thermoforming heat still available in the objects (15) being curled or flanged.

2. A curling or flanging apparatus as claimed in claim 1, further comprising centering means for accurate vertical alignment between mask or template and upper male die.

3. A curling or flanging apparatus as claimed in claim 2, wherein the said centering means comprises resilient tensioners (23), for the said mask or template conveyor (4), which also act as detaching means between the male die and the mask or template (3) after each curling operation.

4. A curling or flanging apparatus as claimed in claim 2 or 3, wherein the said centering means comprises an inclined plane arrangement for the masks or templates (3) to slidably engage therewith.

5. A curling or flanging apparatus as claimed in any preceding claim, wherein the said opposing frame (9) comprises a plurality of projecting portions (20) designed to engage beneath a mask or template (3) while the same is matching with the male die.

6. A curling or flanging apparatus as claimed in any one of claims 1 to 4, wherein two runs of the said mask or template conveyor (4), extend below the said upper male die support (5) and above the said opposing frame (9), whereby a pair of masks or templates (3) are in substantial vertical alignment at the same time, an upper one loaded with objects and a lower empty one, and wherein the said opposing frame (9) is subdivided into an upper portion provided with upper projecting portions (20) and located between each pair of masks or templates (3) and a lower portion located beneath the empty mask or template (3).

7. A curling or flanging apparatus as claimed in any preceding claim, wherein said driving means comprises at least one toggle device (10).

8. Method for thermoforming hollow objects in a thermoforming unit provided with a mask or template conveyor (4) having a plurality of masks or templates (3), characterized in that the additional step of curling or flanging said thermoforming object (15) is utilising the thermoforming heat still available, without any additional heating being required.

## Patentansprüche

1. Roll- oder Bördelvorrichtung für warmgeformte hohle Gegenstände, die in einer Warmformanlage gewonnen werden, die mit einer Masken- oder Schablonenfördervorrichtung (4) mit einer Vielzahl von Masken oder Schablonen (3) versehen ist, von denen jede mit einer Anzahl von Aufnahmen (12) ausgebildet ist, die der Anzahl von Eindrückungen durch die Warmformanlage gleich ist, so daß jede Maske oder Schablone (3) alle Gegenstände aufnehmen und überbringen kann, die in einem Formungsvorgang der Warmformanlage hergestellt worden sind, dadurch gekennzeichnet, daß die Roll- oder Bördelvorrichtung (1) um den Laufweg der Masken- oder Schablonenfördervorrichtung (4) herum angeordnet ist und einen Tragrahmen (2) aufweist, der einen oberen Stempelhalter (5) trägt, der über zumindest einem Förderabschnitt der Masken- oder Schablonenfördervorrichtung (4) angeordnet ist und so viele zur Fördervorrichtung (4) hin gerichtete Stempelvorsprünge (19) aufweist wie Aufnahmen (12) für die warmgeformten Gegenstände (15) in jeder Maske oder Schablone (3) der Maskenfördervorrichtung (4) vorhanden sind, wobei jeder Stempelvorsprung (19) so abgemessen ist, daß er an eine entsprechende Aufnahme (12) in einer Maske oder Schablone (3) angepaßt ist, und wobei jede Maske oder Schablone (3) als Matrize arbeitet, die mit einer abgemessenen umfänglichen Rollausnehmung (13) versehen ist; daß sie einen entgegenwirkenden Rahmen (9) aufweist, der unter dem Stempelhalter (5) und dem oder jedem Förderabschnitt der Masken- oder Schablonenfördervorrichtung (4) angeordnet und verschiebbar an vertikalen Führungen (6) derart befestigt ist, daß er zu der darüber angeordneten Maske oder Schablone (3) hin oder von dieser weg bewegbar ist; und daß sie ein Antriebsmittel (10) aufweist, um entweder den Stempelhalter (5) oder den entgegenwirkenden Rahmen (9) oder beide synchron mit dem Arbeitszyklus der Warmformanlage zu betätigen, um den Stempelhalter (5) und eine Maske oder Schablone (3) der Masken- oder Schablonenfördervorrichtung (4) zusammenzubringen oder auseinanderzubewegen, um die Gegenstände (15), mit denen die Maske oder Schablone (3) beschickt ist, zu rollen, während die in den gerollten oder gebördelten Gegenständen (15) noch vom Warmformen vorhandene Wärme ausgenutzt wird.

2. Roll- oder Bördelvorrichtung nach Anspruch 1, die weiterhin Zentriermittel für eine genaue vertikale Ausrichtung zwischen der Maske oder Schablone und dem oberen Stempel aufweist.

3. Roll- oder Bördelvorrichtung nach Anspruch 2, wobei das Zentriermittel Federspanner (23) für die Masken- oder Schablonenfördervorrichtung (4) aufweist, die nach jedem Rollvorgang auch als Trennmittel zwischen dem Stempel und der Maske oder Schablone (3) arbeiten.

4. Roll- oder Bördelvorrichtung nach Anspruch 2 oder 3, wobei das Zentriermittel eine Schiefe-Ebene-Anordnung für die Masken oder Schablonen (3) aufweist, um mit diesen gleitend in Eingriff zu kommen.

5. Roll- oder Bördelvorrichtung nach einem der vorangegangenen Ansprüche, wobei der entgegenwirkende Rahmen (9) eine Vielzahl von vorspringenden Abschnitten (20) aufweist, die dazu ausgestaltet sind, mit einer Maske oder Schablone (3) von unten in Eingriff zu kommen, während dieselbe auf den Stempel abgestimmt ist.

6. Roll- oder Bördelvorrichtung nach einem der Ansprüche 1 bis 4, wobei sich zwei Förderabschnitte der Masken- oder Schablonenfördervorrichtung (4) unter dem oberen Stempelhalter (5) und über dem entgegenwirkenden Rahmen (9) erstrecken, wodurch gleichzeitig ein Paar Masken oder Schablonen (3) in im wesentlichen vertikaler Ausrichtung zueinander stehen, wobei eine obere mit Gegenständen beschickt ist und eine untere leer ist, und wobei der entgegenwirkende Rahmen (9) in einen oberen, mit oberen vorspringenden Abschnitten (20) versehenen Abschnitt, der zwischen jedem Paar Masken oder Schablonen (3) positioniert ist, und einen unteren Abschnitt eingeteilt ist, der unter der leeren Maske oder Schablone (3) positioniert ist.

7. Roll- oder Bördelvorrichtung nach einem der vorangegangenen Ansprüche, wobei das Antriebsmittel zumindest eine Knebelvorrichtung (10) aufweist.

8. Verfahren zum Warmformen hohler Gegenstände in einer Warmformeinheit, die mit einer Masken- oder Schablonenfördervorrichtung (4) mit einer Vielzahl von Masken oder Schablonen (3) versehen ist, dadurch gekennzeichnet, daß der zusätzliche Schritt des Rollens oder Bördelns der Warmformgegenstände (15) darin besteht, die noch vom Warmformen vorhandene Wärme zu verwenden, ohne daß ein zusätzliches Wärmen erforderlich ist.

## Revendications

1. Appareil de roulage ou d'emboutissage pour des bjets creux thermoformés obtenus dans une unité de thermoformage pourvue d'un transporteur de masques ou de gabarits (4) ayant une pluralité de masques ou de gabarits (3), chacun comprenant le même nombre de sièges (12) que le nombre d'empreintes de l'unité de thermoformage, de sorte que chaque masque ou gabarit (3) est capable de recevoir et de transférer tous les objets 15) produits dans une seule opération de moulage de ladite unité de thermoformage, caractérisé en ce que ledit appareil de roulage ou d'emboutissage (1) est disposé sur le parcours dudit transporteur de masques ou de gabarits (4) et comprend un châssis support (2) portant un support de matrices mâles supérieur (5) disposé au-dessus au moins un passage dudit transporteur de masques ou de gabarits (4) et a autant de saillies de matrice (19) faisant face au transporteur (4) qu'il y a de sièges (12) pour les objets thermoformés (15) dans chaque masque ou gabarit (3) du transporteur de masques (4), chaque saillie de matrice (19) étant calibrée de façon à correspondre à un siège respectif (12) dans un masque ou gabarit (3), et chaque masque ou gabarit (3) agissant comme un moule femelle pourvu d'une gorge de roulage périphérique calibrée (13); un châssis opposé (9) disposé au-dessous du support de matrices mâles (5) et du ou de chaque course du transporteur de masques ou de gabarits (4) et monté de façon à coulisser sur des guides verticaux (6) afin d'être mobile en s'approchant et en s'éloignant d'un masque ou gabarit (3) disposé au-dessus de lui; et des moyens d'entraînement (10) pour actionner de façon synchrone avec le cycle de fonctionnement de ladite unité de thermoformage soit le support de matrices mâles (5), soit le châssis opposé (9), soit les deux, pour assembler et séparer ledit support de matrices mâles (5) et un masque ou gabarit (3) du transporteur de masques ou de gabarits (4) pour obtenir le roulage des objets (15) chargés dans le masque, ou le gabarit (3), tout en tirant parti de la chaleur de thermoformage encore disponible dans les objets (15) roulés ou emboutis.

2. Appareil de roulage ou d'emboutissage selon la revendication 1, comprenant en outre des moyens de centrage pour un alignement vertical précis entre le masque ou gabarit et le moule mâle supérieur.

3. Appareil de roulage ou d'emboutissage selon la revendication 2, dans lequel lesdits moyens de centrage comprennent des tendeurs élastiques (23), pour ledit transporteur de masques ou de gabarits (4), qui agissent aussi comme moyens de séparation entre la matrice mâle et le masque ou gabarit (3) après chaque opération de roulage.

4. Appareil de roulage ou d'emboutissage selon la revendication 2 ou 3, dans lequel lesdits moyens de centrage comprennent un agencement de plan incliné pour les masques ou gabarits (3) pour s'engager en coulissant dans ceux-ci.

5. Appareil de roulage ou d'emboutissage selon l'une quelconque des revendications précédentes, dans lequel ledit châssis opposé (9) comprend une pluralité de parties saillantes (20) conçues pour s'engager au-dessous d'un masque ou gabarit (3) pendant que celui-ci s'adapte à la matrice mâle.

6. Appareil de roulage ou d'emboutissage selon l'une quelconque des revendications 1 à 4, dans lequel deux passages dudit transporteur de masques ou de gabarits (4) s'étendent au-dessous dudit support de matrices mâles supérieur (5) et au-dessus dudit châssis opposé (9), une paire de masques ou de gabarits (3) étant ainsi sensiblement dans un alignement vertical en même temps, un masque supérieur chargé d'objets et un masque vide inférieur, et dans lequel ledit châssis opposé (9) est divisé en une partie supérieure prévue avec des parties saillantes supérieures (20) et située entre chaque paire de masques ou de gabarits (3) et une partie inférieure située au-dessous du masque ou gabarit (3) vide.

7. Appareil de roulage ou d'emboutissage selon l'une quelconque des revendications précédentes, dans lequel lesdits moyens d'entraînement comprennent au moins un dispositif à levier coudé (10).

8. Procédé pour thermoformer des objets creux dans une unité de thermoformage pourvue d'un transporteur de masques ou de gabarits (4) ayant une pluralité de masques ou de gabarits (3), caractérisé en ce que l'étape supplémentaire de roulage ou d'emboutissage dudit objet de thermoformage (15) utilise la chaleur de thermoformage encore disponible, sans qu'aucun chauffage supplémentaire ne soit nécessaire.
